# EUROPÄISCHE PATENTSCHRIFT

(11) **EP 2 384 292 B1**
(45) Veröffentlichungstag und Bekanntmachung des Hinweises auf die Patenterteilung: **09.01.2013**
(21) Anmeldenummer: 09748108.9
(22) Anmeldetag: 03.11.2009
(51) Int. Cl.: B60R 1/00, B60S 1/08, B60R 11/04

(54) **KAMERAANORDNUNG FÜR EIN KRAFTFAHRZEUG UND KRAFTFAHRZEUG MIT EINER KAMERAANORDNUNG**
CAMERA ARRANGEMENT FOR A MOTOR VEHICLE, AND MOTOR VEHICLE COMPRISING A CAMERA ARRANGEMENT
SYSTÈME DE CAMÉRA POUR UN VÉHICULE AUTOMOBILE ET VÉHICULE AUTOMOBILE COMPRENANT UN SYSTÈME DE CAMÉRA

(30) Priorität: 02.01.2009 DE 102009000004
(43) Veröffentlichungstag der Anmeldung: 09.11.2011
(73) Patentinhaber: Robert Bosch GmbH, 70442 Stuttgart (DE)
(72) Erfinder: HUELSEN, Michael, Leonberg 71229 (DE); SEGER, Ulrich, 71229 Leonberg-Warmbronn (DE); KARL, Matthias, 76275 Ettlingen (DE); FREDERIKSEN, Annette, Renningen 71272 (DE)
(86) Internationale Anmeldenummer: PCT/EP2009/064523
(87) Internationale Veröffentlichungsnummer: WO 2010/076065

(56) Entgegenhaltungen:
- EP-A1- 2 062 777
- EP-A2- 1 580 092
- WO-A1-2006/015905
- DE-A1- 10 323 560

## Beschreibung

### Stand der Technik

Kameraanordnungen für Kraftfahrzeuge sind grundsätzlich bekannt. So sind Kameraanordnungen bekannt, die für die Erfassung eines Umfeldes eines Kraftfahrzeuges im Rahmen eines Fahrerassistenzsystems verwendet werden. Die mit der Kameraanordnung aufgenommenen Bilddaten des Fahrzeugumfeldes können zur Unterstützung eines Fahrers verwendet werden, beispielsweise in Form einer Nachtsichtunterstützung, als Verkehrszeichen oder Spurerkennung oder als Verkehrsüberwachung. Des Weiteren ist es bekannt, Kameraanordnungen für die Erfassung eines Fahrzeugscheiben-Zustandes einer Fahrzeugscheibe einzusetzen.

Die DE 103 23 560 A1 offenbart eine Kameraanordnung für ein Kraftfahrzeug, die in einem Fahrzeuginnenraum an einer Fahrzeugscheibe angeordnet ist und über ein Objektiv ein Vorfeld bzw. Kraftfahrzeugumfeld erfasst. Durch einen Umlenkspiegel kann in etwa vertikal einfallendes Licht oberhalb des Kraftfahrzeuges auf das Objektiv umgelenkt und somit durch den Bildsensor erfasst werden. Dieses durch den Bildsensor erfasste Licht wird für die Ermittlung einer Helligkeit des Umfeldes ausgewertet. Vorteil dieser Anordnung ist, dass auf einen zusätzlichen Lichtsensor für die Ermittlung einer Helligkeit des Umfeldes verzichtet werden kann.

Die DE 10 2005 000 650 A1 offenbart eine weitere Kameraanordnung für ein Kraftfahrzeug zur Erfassung eines Umfeldes eines Kraftfahrzeuges. Die Kamera weist einen Bildsensor und eine Kameraoptik auf, die das Fahrzeugumfeld scharf auf den Bildsensor abbildet. Die Kameraanordnung ist in einem Fahrzeuginnenraum an einer Fahrzeugscheibe angeordnet. Des Weiteren umfasst die Kameraanordnung eine Lichtquelle, hier eine LED, mittels der ein Teilbereich der Fensterscheibe beleuchtbar ist. Der Bildsensor ist durch einen Umlenkspiegel von der Lichtquelle derart abgeschirmt, dass durch einen kleinen Teilbereich des Bildsensors ein Ausschnitt der beleuchteten Fensterscheibe erfassbar ist, und der restliche Bereich des Bildsensors für die Erfassung des Fahrzeugumfeldes verwendet wird. Der mit der Lichtquelle beleuchtbare, durch den Bildsensor erfassbare Ausschnitt der Fensterscheibe kann für die Ermittlung einer Benetzung der Scheibe durch Regentropfen im Rahmen einer Regensensorfunktion ausgewertet werden.

Die gattangsbildende EP1580092 A2 zeigt eine Kamera in einem Fahrzeug, die durch eine Fahrzeugscheibe hinweg eine Fahrzeugumgebung erfasst. Gemäß einer Ausführungsform ist im Erfassungsbereich der Kameraoptik ein Hohlspiegel vorgesehen, der zur Erfassung einer Außenseite der Windschutzscheibe dient, um einen Teil eines Regensensors darzustellen. Zusätzlich zum Hohlspiegel wird auch eine kombination aus Planspiegel und eine verwendet.

Die WO 2006/015905 A1 beschreibt den optischen Modul für ein den aus dem Vorraum in Fahrtrichtung eines Kraftfahrzeugs erfassendes Assistenzsystem, bei dem zwischen dem Bildsensor und einem die Kameraoptik darstellenden Linsensystem ein halbdurchlässicher Spiegel angeordnet ist, der über eine weitere Linse einen näheren Bereich der Windschutzscheibe des Fahrzeugs erfasst.

Die DE 10323560 A1 beschreibt eine Kamera für ein Fahrzeug, bei der im Erfassungsbereich einer Kameraoptik ein konvexer Umlenkspiegel vorgesehen ist, der zur Umlenkung von Licht aus einer von der optischen Achse der Kamera verschiedenen zweiten Richtung zu der Kameraoptik vorgesehen ist. Aus diesem Licht aus der zweiten Richtung kann ein Helligkeitssignal gewonnen werden.

### Offenbarung der Erfindung

Die erfindungsgemäße Kameraanordnung für ein Kraftfahrzeug weist eine Kamera mit einem Bildsensor und einer Kameraoptik bzw. einem Objektiv auf, durch die bzw. das wie üblich ein Umfeld z. B. durch eine Fahrzeugscheibe erfasst und auf den Bildsensor abgebildet bzw. fokussiert wird. Erfindungsgemäß ist weiterhin eine Kamerazusatzoptik im Strahlengang vor der Kameraoptik vorgesehen, wobei durch die gesamte Optikanordnung, die aus der Kameraoptik und der Kamerazusatzoptik gebildet ist, ein weiteres Umfeld auf den Bildsensor fokussierbar ist. Anders als in der DE 103 23 560 A1 ist hierbei die Gegenstandsweite der aus der Kameraoptik und der Kamerazusatzoptik gebildeten Optikanordnung zur Abbildung auf dem Bildsensor von der entsprechenden Gegenstandsweite der Kameraoptik verschieden. Insbesondere kann die Kameraoptik auf die Gegenstandsweite unendlich und die aus der Kameraoptik und der Kamerazusatzoptik gebildete Optikanordnung auf einen endlichen Wert fokussiert sein.

Die erfindungsgemäße Kameraanordnung ermöglicht es, unterschiedliche Umfelder mit nur einem Bildsensor jeweils als scharfes Bild zu erfassen. Das erste Umfeld ist insbesondere das Umfeld einer Fahrzeugumgebung, das zweite Umfeld kann ein weiteres Umfeld des Fahrzeuges, beispielsweise eine Ausrichtung nach oben für die Erfassung von Verkehrsinformationstafeln oder eine Ausrichtung zur Seite zur Erfassung des Straßenrandes oder zur Erfassung von Verkehrsschildem, insbesondere aber auch eine Fahrzeugscheibe sein. Die Kameraoptik und die Kamerazusatzoptik können statisch, d.h. unbeweglich ausgebildet sein. Eine aufwendige Anordnung beweglicher optischer Elemente, beispielsweise Linsen, mit dem Ziel, unterschiedliche Gegenstandsweiten einstellen zu können, ist durch das Vorsehen der Kameraoptik und der Kamerazusatzoptik nicht zwingend notwendig.

Vorteilhafterweise weist der Bildsensor einen ersten Sensorbereich für die Erfassung des ersten Umfeldes auf, und einen sich vom ersten Bereich unterscheidenden zweiten Sensorbereich für die Erfassung des zweiten Umfeldes. Der zweite Sensorbereich kann insbesondere auf dem Bildsensor lateral außen ausgebildet sein.

Die erfindungsgemäße Kamera erlaubt auf diese Weise gleichzeitig die Auswertung der Abbildung des Fahrzeugumfeldes für Funktionen wie z. B. Fahrspurerkennung, Verkehrszeichenerkennung oder Fußgängererkennung und die Auswertung der Abbildung der Fahrzeugscheibe, um beispielsweise im Rahmen einer Regensensorfunktion die Benetzung der Fensterscheibe durch Wassertropfen zu ermitteln, oder eine Verschmutzung oder eine Beschädigung der Scheibe auf der Basis von scharf abgebildeten Details einer Oberfläche der Fahrzeugscheibe zu erkennen. Gegebenenfalls kann zusätzlich eine Beleuchtung der Fahrzeugscheibe vorgesehen sein, die eine verbesserte Erfassung einer Benetzung der Fensterscheibe durch Wassertropfen, einer Verschmutzung oder einer Beschädigung der Scheibe durch die Kamera ermöglicht.

Die Kamerazusatzoptik kann vollständig in oder an einer Kamerahalterung zur Befestigung der Kamera, insbesondere zur Befestigung an einer Fahrzeugscheibe, angeordnet sein. Somit können die Kamerahalterung mit der gesamten Kamerazusatzoptik und die Kamera als separat auswechselbare Module ausgebildet sein. Alternativ kann die Kamerazusatzoptik ebenfalls an der Kamera befestigt sein.

Weitere vorteilhafte Weiterbildungen sind Gegenstände der weiteren abhängigen Ansprüche.

Kurze Beschreibung der Zeichungen
- Fig. 1: zeigt eine Ausführungsform einer erfindungsgemäßen Kameraanordnung,
- Fig. 2: zeigt eine perspektivische Ansicht der Kameraanordnung, und

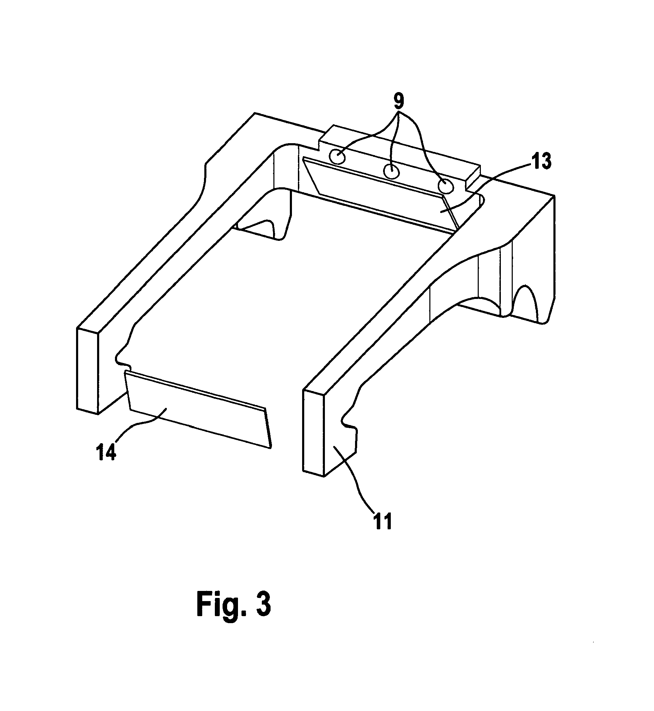

- Fig. 3: zeigt eine perspektivische Ansicht einer Kamerahalterung der Kameraanordnung.

### Ausführungsform der Erfindung

Gleiche oder einander entsprechende Bauteile sind in den Figuren mit denselben Bezugszeichen versehen.

Eine Kameraanordnung 1 ist für ein Kraftfahrzeug zur Erfassung eines Umfeldes ausgebildet. Die Kameraanordnung 1 umfasst eine Kamera 2 und eine Kamerahalterung 11. Die Kamerahalterung 11 ist an einer Fahrzeugscheibe 4, hier einer Windschutzscheibe, in einem Kraftfahrzeuginnenraum eines nicht näher dargestellten Kraftfahrzeugs befestigt und trägt und positioniert die Kamera 2. Die Kamera 2 weist auf ein Kameragehäuse 10, einen Bildsensor 3 sowie eine Kameraoptik 12 (bzw. Objektiv), die hier durch eine Linse dargestellt ist. Der Bildsensor 3 ist auf Halbleiterbasis, beispielsweise als CMOS- oder CCD-Bauteil, ausgebildet, der Bildsignale S1 ausgibt. Die Kameraoptik 12 bildet ein erstes Umfeld, hier ein Umfeld des Fahrzeuges, welches z. B. in Fahrtrichtung vor dem Kraftfahrzeug liegt, durch die Fahrzeugscheibe 4 scharf auf den Bildsensor 3 ab. Hierzu wird durch die Fahrzeugscheibe 4 einfallende erste Strahlung 20 auf einen ersten Sensorbereich 7a des Bildsensors 3 abgebildet bzw. fokussiert.

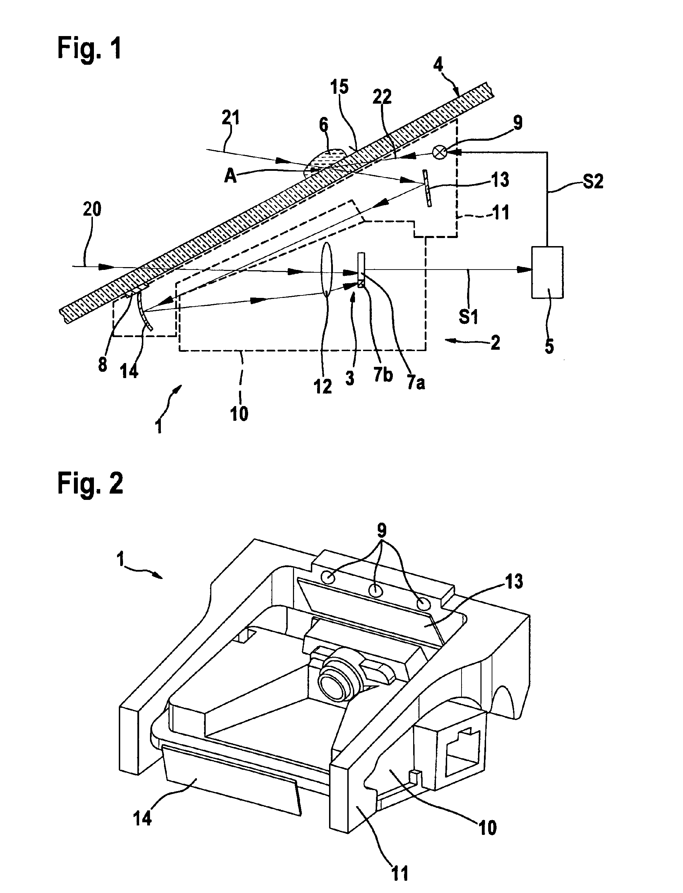

Erfindungsgemäß ist weiterhin eine Kamerazusatzoptik vorgesehen, die hier durch einen Umlenkspiegel 13 und einen Hohlspiegel 14 gebildet wird. Die Kamerazusatzoptik 13, 14 ist teilweise im Strahlengang vor der Kameraoptik 12 angeordnet, da der Hohlspiegel 14 im Erfassungsbereich der Kameraoptik 12 liegt. Die aus der Kamerazusatzoptik 13, 14 und der Kameraoptik 12 gebildete Optikanordnung bildet ein zweites Umfeld, hier einen Ausschnitt A einer Fensterscheibenoberfläche 15 der Fensterscheibe 4, scharf auf den Bildsensor 3 ab. Somit tritt von dem Ausschnitt A der Fahrzeugscheibe 4 ausgehende zweite Strahlung 21 bzw. durch den Ausschnitt A hindurchtretende zweite Strahlung 21 nacheinander durch die Kamerazusatzoptik 13, 14 und die Kameraoptik 12 und wird auf einen sich vom ersten Sensorbereich 7a unterscheidenden zweiten Sensorbereich 7b des Bildsensors 3 abgebildet bzw. fokussiert. Die zweite Strahlung 21 kann wie eingezeichnet aus dem Umfeld des Fahrzeugs kommen und durch die Fahrzeugscheibe 4, gegebenenfalls auch einen auf dieser haftenden Wassertropfen 6 treten, oder auch aus dem Innenraum des Fahrzeugs stammen und entsprechend reflektiert werden. In Fig. 1 ist der genaue Strahlengang durch die Fahrzeugscheibe 4 und den Wassertropfen 6 der Einfachheit und Übersichtlichkeit halber nicht dargestellt, sondern vereinfacht.

In diesem Ausführungsbeispiel ist die Gegenstandsweite bzw. Objektweite der Kameraoptik 12 unendlich, die Gegenstandsweite bzw. Objektweite der gemeinsamen Optikanordnung aus Kameraoptik 12 und Kamerazusatzoptik 13, 14 ist endlich und deren Fokus liegt im Bereich der Fahrzeugscheibe 4. Durch einen geeigneten Abstand zwischen den Spiegeln 13, 14 kann eine hinreichend große Gegenstandsweite ausgebildet werden, um dennoch einen Bereich A, der relativ nahe an der Kamera 2 angeordnet ist, mit guten Abbildungseigenschaften auf dem Bildsensor 3 abzubilden. Alternativ ist es ebenfalls möglich, Optiken 12, 13, 14 mit anderen Gegenstandsweiten einzusetzen.

Um die Beeinflussung der Bildsensorbereiche 7a, 7b durch die Strahlung aus dem Ausschnitt A der Fensterscheibe 4 bzw. aus dem Umfeld der Fahrzeugumgebung zu reduzieren, ist für die Trennung der beiden unterschiedlich fokussierten Bildinformationen eine Blende 8 vor der Linse 12 angeordnet, so dass auf dem Bildsensor 3 zwischen dem erstem Sensorbereich 7a und dem zweiten Sensorbereich 7b ein Übergangsbereich gebildet ist, in dem die Bildinformationen verdunkelt sind. Alternativ kann auf eine derartige Blende 3 grundsätzlich auch verzichtet werden.

Des Weiteren umfasst die Kameraanordnung 1 eine Auswerteeinrichtung 5, die derart eingerichtet ist, dass sie die Bildsignale S1, die Bildinformationen des ersten Sensorbereichs 7a und des zweiten Sensorbereichs 7b des Bildsensors 3 enthalten, auswertet. Die Bildinformationen des zweiten Umfeldes A werden hier für die Ermittlung eines Scheibenzustandes der Fahrzeugscheibe 4 ausgewertet. In diesem Fall ist die Auswerteeinrichtung 5 insbesondere derart eingerichtet, dass eine unterschiedliche Benetzung des Ausschnitts A der Fahrzeugscheibe 4 durch Wassertropfen 6 ermittelt wird, und diese Informationen z. B. im Rahmen einer Regensensorfunktion weiter verwendet werden können, beispielsweise für die Ansteuerung eines Scheibenwischers. Alternativ oder zusätzlich ist es ebenfalls möglich, eine Verschmutzung oder eine Beschädigung der Fensterscheibe 4, beispielsweise durch Kratzer, auf diese Weise zu ermitteln.

Des Weiteren umfasst die Kameraanordnung 1 vorteilhafterweise eine Lichtquelle 9, beispielsweise eine oder mehrere LEDs, mit der der Ausschnitt A der Fahrzeugscheibe 4 mit Strahlung 22 zusätzlich beleuchtbar ist. Dabei ist die Lichtquelle 9 z. B. derart angeordnet, dass im Bereich des Ausschnitts A reflektierte Strahlung 22 über die Kamerazusatzoptik 13, 14 auf den Bildsensor 3 fallen kann. Die Lichtquelle 9 ermöglicht es, insbesondere bei schlechten Lichtverhältnissen, beispielsweise bei Nacht, den Ausschnitt A zu beleuchten, um ein genügend helles Abbild des Ausschnitts A auf dem Bildsensor 3 zu erzeugen, wobei Letzteres vorteilhaft für die Auswertung des Scheibenzustandes ist. Die Lichtquelle 9 kann hierbei wie gezeigt mittels Steuersignalen S2 von der Auswerteeinheit 5, die somit auch eine Steuereinheit darstellt, oder aber auch von einer anderen Einrichtung angesteuert werden.

Somit sind der Bildsensor 3 und die Kameroptik (Objektiv) 12 im Kameragehäuse 10 der Kamera 2 angeordnet. Die Kamerazusatzoptik 13, 14, die Blende 8 und die Lichtquelle 9 sind in oder an der Kamerahalterung 11 angeordnet, die somit ein eigenes Modul für diese Zusatzfunktion der Scheibendetektion bildet. Alternativ ist es jedoch auch möglich, beispielsweise zumindest Teile der Kamerazusatzoptik 13, 14 und/oder die Blende 8 und/oder die Lichtquelle 9 an dem Kameragehäuse 10 vorzusehen.

Die Auswerteeinheit 5 ist vorteilhafterweise innerhalb des Kameragehäuses 10 angeordnet; sie kann aber auch außerhalb beispielsweise Teil einer zentralen Steuereinheit eines Fahrzeugassistenzsystems sein.

Alternativ kann das zweite Umfeld anstatt eines Ausschnitts A der Fahrzeugscheibe 4 beispielsweise ein Umfeld des Fahrzeuges sein, welches einen Straßenrand, sich am Straßenrand befindende Verkehrszeichen, oder sich oberhalb des Fahrzeuges befindende Verkehrsinformationstafeln erfasst, oder auch den Fahrzeuginnenraum erfassen, wobei erfindungsgemäß jeweils eine andere Gegenstandsweite als bei dem ersten Umfeld einstellbar ist. Eine Umlenkung der Blickrichtung kann über optische Elemente, insbesondere über Spiegel, bewirkt werden.

## Patentansprüche

1. Kameraanordnung (1) für ein Kraftfahrzeug, aufweisend:
eine Kamera (2), die einen Bildsensor (3) zur Ausgabe von Bildsignalen (S1) und eine Kameraoptik (12) mit einem Erfassungsbereich zum Erfassen eines ersten Umfeldes und
Abbilden des ersten Umfeldes mit einer ersten Gegenstandsweite auf dem Bildsensor (3) aufweist, und
eine Kamerazusatzoptik (13,14), die teilweise im Erfassungsbereich der Kameraoptik (12) vorgesehen ist,
wobei die Kameraoptik (12) und die Kamerazusatzoptik (13, 14) zusammen eine Optikanordnung bilden, durch die ein zweites Umfeld (A) mit einer von der ersten Gegenstandsweite verschiedenen zweiten Gegenstandsweite auf dem Bildsensor (3) abbildbar oder fokussierbar ist,
wobei die Kamerazusatzoptik (13, 14) zwei Spiegel (13, 14) aufweist, von denen mindestens ein Spiegel (14) eine endliche Brennweite aufweist,
wobei die Kamerazusatzoptik (13, 14) den im Erfassungsbereich der Kameraooptik (12) vorgesehenen Spiegel (14) aufweist,
**dadurch gekennzeichnet, dass**
die Kamerazusatzoptik zusatzlich einen von dem im Erfassungsbereich der Kameraooptik (12) vorgesehenen Spiegel (14) beabstandeten, außerhalb des Erfassungsbereichs der Kameraoptik (12) vorgesehenen zweiten Spiegel (13) aufweist.

2. Kameraanordnung nach Anspruch 1, **dadurch gekennzeichnet, dass** der im Strahlengang vor der Kameraoptik (12) angeordnete Spiegel (14) als Hohlspiegel (14) mit endlicher Brennweite ausgebildet ist und der weitere Spiegel (13) als Umlenkspiegel (13) zum Umlenken des Strahlengangs auf das zweite Umfeld (A) ausgebildet ist.

3. Kameraanordnung nach einem der vorhergehenden Ansprüche, **dadurch gekennzeichnet, dass** das erste Umfeld eine Fahrzeugumgebung ist, die die Kamera (2) durch eine Fahrzeugscheibe (4) erfasst, und das zweite Umfeld (A) eine weitere Fahrzeugumgebung oder ein Bereich (A) einer Fahrzeugscheibe (4) ist.

4. Kameraanordnung nach Anspruch 3, **dadurch gekennzeichnet, dass** sie eine Auswerteeinrichtung (5) aufweist, die die von dem Bildsensor ausgegebenen Bildsignale (S1) (3) aufnimmt und aus den das zweite Umfeld betreffenden Bildsignalen einen Scheibenzustand der Fahrzeugscheibe (4) ermittelt, insbesondere für die Ermittlung einer Benetzung der Fahrzeugscheibe (4) durch Regentropfen (6).

5. Kameraanordnung nach einem der vorhergehenden Ansprüche, **dadurch gekennzeichnet, dass** der Bildsensor (3) einen ersten Sensorbereich (7a) für die Erfassung des ersten Umfelds und einen vom dem ersten Sensorbereich (7a) verschiedenen zweiten Sensorbereich (7b) für die Erfassung des zweiten Umfelds (A) aufweist.

6. Kameraanordnung nach Anspruch 5, **dadurch gekennzeichnet, dass** die Kamera (2) zusätzlich eine Blende (8) aufweist für die Trennung des ersten Sensorbereiches (7a) vom zweiten Sensorbereich (7b).

7. Kameraanordnung nach einem der vorhergehenden Ansprüche, **dadurch gekennzeichnet, dass** sie eine Lichtquelle (9) für die Beleuchtung des zweiten Umfelds (A) aufweist.

8. Kameraanordnung nach einem der vorhergehenden Ansprüche, **dadurch gekennzeichnet, dass** die Kamerazusatzoptik (13, 14) zumindest teilweise an einem Kameragehäuse (10) der Kamera (2) und/oder in oder an einer Kamerahalterung (11) zur Befestigung der Kamera (2) angeordnet ist.

9. Kameraanordnung nach Anspruch 8, **dadurch gekennzeichnet, dass** die Kamerazusatzoptik (13, 14) vollständig in oder an einer Kamerahalterung (11) zur Befestigung der Kamera (2) angeordnet ist, wobei die Kamerahalterung (11) und die Kamera (2) separat auswechselbare Module sind.

10. Kameraanordnung nach einem der vorhergehenden Ansprüche, **dadurch gekennzeichnet, dass** die Kameraoptik (12) und die Kamerazusatzoptik (13, 14) statisch ausgebildet sind.

11. Kraftfahrzeug mit einer Kameraanordnung (1) nach einem der Ansprüche 1 bis 10 und einer Fahrzeugscheibe (4), wobei die Kameraanordnung in einem Fahrzeuginnenraum hinter der Fahrzeugscheibe (4) angeordnet ist.

## Claims

1. Camera arrangement (1) for a motor vehicle, having:
a camera (2) which has an image sensor (3) for outputting image signals (S1), and camera optics (12) with an acquisition area for acquiring first surroundings and imaging the first surroundings with a first object distance on the image sensor (3), and
additional camera optics (13, 14) which are partially provided in the acquisition area of the camera optics (12),
the camera optics (12) and the additional camera optics (13, 14) together forming an optical arrangement which can be used to image or focus second surroundings (A) with a second object distance, differing from the first object distance, on the image sensor (3),
the additional camera optics (13, 14) having two mirrors (13, 14) of which at least one mirror (14) has a finite focal length, and
the additional camera optics (13, 14) having the mirror (14) provided in the acquisition area of the camera optics (12),
**characterized in that**
the additional camera optics additionally has a second mirror (13), which is spaced apart from the mirror (14) provided in the acquisition area of the camera optics (12) and is provided outside the acquisition area of the camera optics (12).

2. Camera arrangement according to Claim 1, **characterized in that** the mirror (14) arranged in the beam path upstream of the camera optics (12) is designed as a concave mirror (14) with a finite focal length, and the further mirror (13) is designed as a deflecting mirror (13) for deflecting the beam path onto the second surroundings (A).

3. Camera arrangement according to one of the preceding claims, **characterized in that** the first surroundings is a vehicle environment which the camera (2) acquires through a vehicle window (4), and the second surroundings (A) is a further vehicle environment or a region (A) of a vehicle window (4).

4. Camera arrangement according to Claim 3, **characterized in that** it has an evaluation device (5) which receives the image signals (S1) output by the image sensor (3) and determines a window state of the vehicle window (4) from the image signals relating to the second surroundings, particularly for determination of a wetting of the vehicle window (4) by raindrops (6).

5. Camera arrangement according to one of the preceding claims, **characterized in that** the image sensor (3) has a first sensor area (7a) for the acquisition of the first surroundings, and a second sensor area (7b), differing from the first sensor area (7a), for the acquisition of the second surroundings (A).

6. Camera arrangement according to Claim 5, **characterized in that** the camera (2) additionally has a diaphragm (8) for separating the first sensor area (7a) from the second sensor area (7b).

7. Camera arrangement according to one of the preceding claims, **characterized in that** it has a light source (9) for illuminating the second surroundings (A).

8. Camera arrangement according to one of the preceding claims, **characterized in that** the additional camera optics (13, 14) is arranged at least partially on a camera housing (10) of the camera (2), and/or in or on a camera mount (11) for fixing the camera (2).

9. Camera arrangement according to Claim 8, **characterized in that** the additional camera optics (13, 14) is arranged entirely in or on a camera mount (11) for fixing the camera (2), the camera mount (11) and the camera (2) being separately interchangeable modules.

10. Camera arrangement according to one of the preceding claims, **characterized in that** the camera optics (12) and the additional camera optics (13, 14) are of static design.

11. Motor vehicle having a camera arrangement (1) according to one of Claims 1 to 10 and a vehicle window (4), in which the camera arrangement is arranged in a vehicle interior behind the vehicle window (4).

## Revendications

1. Dispositif de caméra (1) pour véhicule automobile, comprenant :
une caméra (2), qui comprend un capteur d'image (3) destiné à délivrer des signaux d'image (S1) et une optique de caméra (12) comportant une zone de détection destinée à détecter un premier environnement et à former l'image du premier environnement avec une première distance objet sur le capteur d'image (3), et une optique de caméra supplémentaire (13, 14) qui est prévue en partie dans la zone de détection de l'optique de caméra (12),
dans lequel l'optique de caméra (12) et l'optique de caméra supplémentaire (13, 14) forment ensemble un système optique au moyen duquel un second environnement (A) peut être mis sous forme d'image ou focalisé sur le capteur d'image (3) avec une seconde distance objet différente de la première distance objet,
dans lequel l'optique de caméra supplémentaire (13, 14) comporte deux miroirs (13, 14) parmi lesquels au moins un miroir (14) présente une distance focale finie,
dans lequel l'optique de caméra supplémentaire (13, 14) comprend le miroir (14) prévu dans la zone de détection de l'optique de caméra (12),
**caractérisé en ce que** l'optique de caméra supplémentaire comprend en outre un second miroir (13) prévu à l'extérieur de la zone de détection de l'optique de caméra (12) et espacé du miroir (14) prévu dans la zone de détection de l'optique de caméra (12).

2. Système de caméra selon la revendication 1, **caractérisé en ce que** le miroir (14) disposé sur le chemin de faisceau en amont de l'optique de caméra (12) est réalisé sous la forme d'un miroir concave (14) ayant une distance focale finie, et le miroir supplémentaire (13) est réalisé sous la forme d'un miroir de déviation (13) destiné à dévier le chemin de faisceau vers le second environnement (A).

3. Système de caméra selon l'une quelconque des revendications précédentes, **caractérisé en ce que** le premier environnement est un environnement de véhicule que la caméra (2) détecte à travers une vitre de véhicule (4), et le second environnement (A) est un autre environnement de véhicule ou une zone (A) d'une vitre de véhicule (4).

4. Système de caméra selon la revendication 3, **caractérisé en ce qu'**il comporte un dispositif d'évaluation (5) qui acquiert les signaux d'image (S1) délivrés par le capteur d'image (3) et détermine à partir des signaux d'image associés au second environnement un état de vitre de la vitre de véhicule (4), pour déterminer en particulier le mouillage de la vitre de véhicule (4) par des gouttes de pluie (6).

5. Système de caméra selon l'une quelconque des revendications précédentes, **caractérisé en ce que** le capteur d'image (3) comprend une première zone de capteur (7a) destinée à détecter le premier environnement et une seconde zone de capteur (7b) différente de la première zone de capteur (7a) destinée à détecter le second environnement (A).

6. Système de caméra selon la revendication 5, **caractérisé en ce que** la caméra (2) comprend en outre un diaphragme (8) destiné à séparer la première zone de capteur (7a) de la seconde zone de capteur (7b).

7. Système de caméra selon l'une quelconque des revendications précédentes, **caractérisé en ce qu'**il comprend une source de lumière (9) destinée à éclairer le second environnement (A).

8. Système de caméra selon l'une quelconque des revendications précédentes, **caractérisé en ce que** l'optique de caméra supplémentaire (13, 14) est disposée au moins en partie dans un boîtier de caméra (10) de la caméra (2) et/ou dans ou sur une fixation de caméra (11) destinée à fixer la caméra (2).

9. Système de caméra selon la revendication 8, **caractérisé en ce que** l'optique de caméra supplémentaire (13, 14) est entièrement disposée dans ou sur une fixation de caméra (11) destinée à fixer la caméra (2), la fixation de caméra (11) et la caméra (2) étant des modules pouvant être remplacés séparément.

10. Système de caméra selon l'une quelconque des revendications précédentes, **caractérisé en ce que** l'optique de caméra (12) et l'optique de caméra supplémentaire (13, 14) sont réalisées de manière statique.

11. Véhicule automobile comportant un système de caméra (1) selon l'une quelconque des revendications 1 à 10 et une vitre de véhicule (4), dans lequel le système de caméra est disposé dans un espace intérieur du véhicule à l'arrière de la vitre de véhicule (4).
